(19) Europäisches Patentamt
European Patent Office
Office européen des brevets

(11) **EP 0 555 812 B1**

(12) **EUROPÄISCHE PATENTSCHRIFT**

(45) Veröffentlichungstag und Bekanntmachung des Hinweises auf die Patenterteilung:
07.10.1998 Patentblatt 1998/41

(51) Int. Cl.$^6$: **B60T 8/00**

(21) Anmeldenummer: 93101991.3

(22) Anmeldetag: 09.02.1993

(54) **Antiblockierregelsystem für Motorräder**

Antiskid control system for motorbikes

Système de régulation antiblocage pour moto

(84) Benannte Vertragsstaaten:
DE FR GB IT

(30) Priorität: 14.02.1992 DE 4204350

(43) Veröffentlichungstag der Anmeldung:
18.08.1993 Patentblatt 1993/33

(73) Patentinhaber:
• FTE automotive GmbH
96106 Ebern (DE)
• Bayerische Motoren Werke Aktiengesellschaft
80788 München (DE)

(72) Erfinder:
• **Roll, Georg, Dr.**
**W-6056 Heusenstamm (DE)**
• **Ohm, Heinz-F.**
**W-6108 Weiterstadt (DE)**
• **Hauser, Berthold**
**W-8091 Jakobneuharting (DE)**

(74) Vertreter:
**Oppermann, Ewald, Dipl.-Ing.**
**Oppermann & Oppermann**
**Patentanwälte**
**Am Wiesengrund 35**
**63075 Offenbach (DE)**

(56) Entgegenhaltungen:
EP-A- 0 398 360          DE-A- 3 530 280
GB-A- 2 134 200

**Beschreibung**

Die Erfindung betrifft ein Antiblockierregelsystem für Motorräder nach dem Oberbegriff des Anspruchs 1.

Ein derartiges System ist beispielsweise aus der DE 35 30 280 A1 bekannt. Gemäß diesem Stand der Technik überwachen Geschwindigkeitssensoren die Fahrzeugräder und liefern der Winkelgeschwindigkeit der Fahrzeugräder entsprechende elektrische Signale, welche einer Überwachungsschaltung anliegen. Die Überwachungsschaltung erkennt aus den Signalen der Geschwindigkeitssensoren Überbremsungszustände und liefert entsprechende Ansteuersignale für einen Druckmodulator, der den Bremsdruck am entsprechenden Fahrzeugrad regelt.

Motorräder mit weicher Vorderradaufhängung neigen bei blockierschutzgeregelten Bremsungen auf gut haftendem Untergrund zu erheblichem Jittern der Vorderachsgabel, da jede überbremsungsbedingte Druckentlastung zu einem Ausfedern der Gabel und damit zu einem Verlust an Vorderradaufstandskraft führt, was wiederum eine stärkere Entlastung mit weiterer Ausfederung erforderlich macht (Mitkopplungseffekt).

Dieser Effekt macht sich besonders im unteren Geschwindigkeitsbereich bemerkbar, wo aufgrund der kritischeren Schlupfkurvenverhältnisse generell schon stärkere Druckmodulationen nötig sind, um Radblockiertendenzen auszuregeln.

Dadurch entstehen verlängerte Bremswege und mangelnder Regelungskomfort.

Es ist deshalb Aufgabe der Erfindung, ein Antiblockierregelsystem für Motorräder aufzuzeigen, welches die vorgenannten Nachteile vermeidet und bei optimalem Bremsweg und gutem Regelungskomfort häufige Radgeschwindigkeitseinbrüche während einer geregelten Bremsung verhindert.

Die Lösung dieser Aufgabe erfolgt mit den im kennzeichnenden Teil des Anspruchs 1 angegebenen Merkmalen.

Vorteilhafte Weiterbildungen enthalten die Ansprüche 2 bis 4.

Der Überbremsungsverhinderer erkennt, wann das geregelt gebremste Fahrzeug schon ganz dicht am optimalen Verzögerungspunkt arbeitet. In diesem Fall wird der Druckmodulator veranlaßt, den Bremsdruck am Vorderrad nur noch um kleine Beträge zu erhöhen, so daß das Vorderrad vor allem im unteren Geschwindigkeitsbereich keine Blockierneigung mehr zeigt und keine starken Druckmodulationen mehr erforderlich sind.

Die Erfindung soll anhand der Figuren erläutert werden. Es zeigt:

Figur 1     ein Blockschaltbild des Antiblockiersystems

Figur 2     die Bewegung der Vorderradgabel bei starker Bremsdruckmodulation

Figur 3     ein Zeitdiagramm einer Regelbremsung ohne Überbremsungsverhinderer (Anregung von Radjitter bei starker Bremsdruckmodulation)

Figur 4     die Funktion f (VREF) für die extrem flache Druckrampe

Figur 5     ein Schaltbild des Überbremsungsverhinderers

Figur 6     ein Zeitdiagramm einer Bremsung mit Überbremsungsverhinderer

Dabei bedeuten die Variablen und Konstanten:

SO          = Signal vom induktiven Vorderradsensor, das eine Bestimmung der aktuellen Vorderrad-Umfangsgeschwindigkeit ermöglicht

S1          = Signal vom induktiven Hinterradsensor, das eine Bestimmung der aktuellen Hinterrad-Umfangsgeschwindigkeit ermöglicht

VO          = Vorderrad-Momentangeschwindigkeit (aus den Radsensorsignalen bildet ein ABS-Regler in jedem Regelungszyklus die momentane Radumfangsgeschwindigkeit)

V1          = Hinterrad-Momentangeschwindigkeit

VF          = Tatsächliche Fahrzeuggeschwindigkeit (dem ABS-Regler nicht bekannt)

PO          = Radbremszylinderdruck am Vorderrad (dieser Druck wird bei der Regelbremsung vom ABS-Regler eingestellt; die hier vorgestellten Mechanismen können indirekt über den ABS-Regler Einfluß auf PO nehmen)

POein = Wert von PO, bei dem das Vorderrad Blockiertendenzen zeigt

POein_i = Wert von PO, bei dem die Vorderradgeschwindigkeit zum i-tenmal während einer Regelbremsung einbricht

DeltaPO = Betrag der Vorderrad-Druckmodulation, der notwendig ist, um eine Vorderrad-Blockiertendenz zu beheben

DeltaPO_i = DeltaPO beim i-ten Vorderrad-Geschwindigkeitseinbruch während einer Regelbremsung

P1 = Radbremszylinderdruck am Hinterrad

PHBZO = Hauptbremszylinderdruck des Vorderradkanals

PHBZ1 = Hauptbremszylinderdruck des Hinterradkanals

VREF = berechnete Fahrzeug-Referenzgeschwindigkeit (wird aus gefilterten Radgeschwindigkeiten und Plausibilitätsüberlegungen gebildet)

AREF = gefilterte Fahrzeug-Referenzverzögerung (zeitliche Ableitung von VREF, die aufgrund der kurzen Regelungszykluszeiten allerdings sehr stark schwankt. Aus diesem Grund erfolgt allgemein eine Filterung dieses Signals. AREF wird als eine derartige gefilterte Fahrzeugverzögerung angenommen)

AREFMin = Minimale Fahrzeug-Referenzverzögerung, die Überschritten werden muß, damit die flache Belastungsrampe aktiviert wird

ExFlBel = Steuersignal an den ABS-Regler bewirkt eine extrem flache Druckwiederbelastung am Vorderrad

TOExFlBel = Zeitpunkt, zu dem der Vorderradbremsdruck innerhalb der Regelung nur noch mit extrem flachem Gradienten erhöht wird

REO = Anzeigesignal für eine Radüberbremsung (boolesches 1-bit-Signal, das auf logisch "1" liegt, wenn am Vorderrad ein instabiler Schlupf vorliegt)

VSO = Geschwindigkeitsschwelle für das Vorderrad (wenn VO unter VSO sinkt, erkennt der ABS-Regler eine Vorderradblockiertendenz)

TOein = Zeitpunkt, zu dem ein überbremsungsbedingter Radgeschwindigkeitseinbruch erkannt wird

TOein_i = Zeitpunkt, zu dem innerhalb einer Regelbremsung zum i-tenmal ein überbremsungsbedingter Radgeschwindigkeitseinbruch erkannt wird

TOaus = Zeitpunkt, zu dem ein Radgeschwindigkeitseinbruch ausgeregelt worden ist

TOaus_i = Zeitpunkt, zu dem innrhalb einer Regelbremsung zum i-tenmal ein Radgeschwindigkeitseinbruch ausgeregelt worden ist

PORef = Referenzwert für den Vorderraddruck, bei dessen Überschreitung der hier beschriebene Mechanismus aktiviert werden darf

C1,C2,D1 = Federkonstanten und Dämpfungskonstante der Motorrad-Vorderradgabel

FVRA_O, FVRA_1 = Vorderradaufstandskraft für unterschiedliche Bremszustände

FB = Bremskraft

FT = Massenträgheitskraft

3

Pconst = konstanter Druckbetrag

K1,K2,K3 = Konstanten für Funktion AREFMin = f(VREF)

1g = Erdbeschleunigung = 9,81 m/s^2

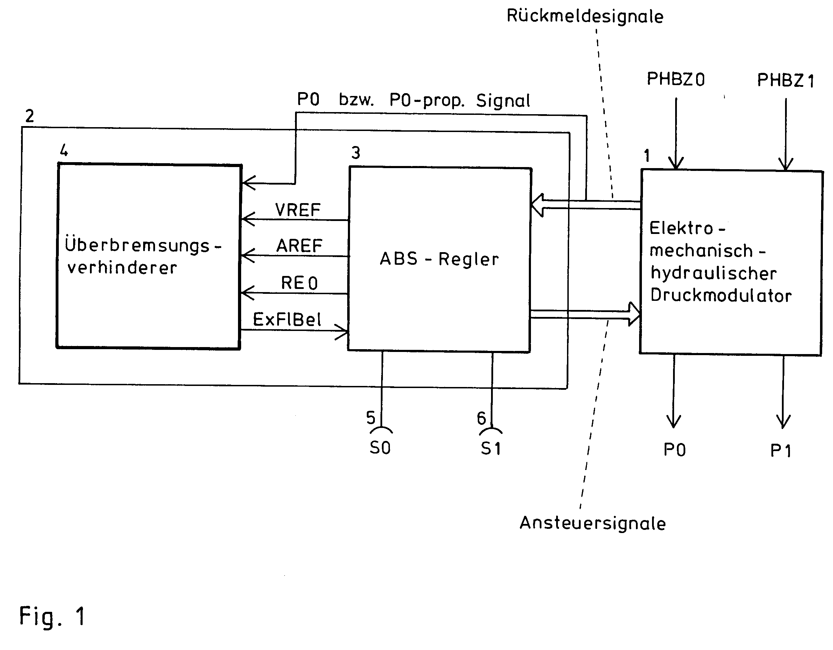

Figur 1 zeigt ein Blockschaltbild eines Antiblockiersystems, bestehend aus einem hydraulisch-elektro-mechanischen Druckmodulator (1) und einer elektronischen Steuereinheit (2), die neben der Überwachungsschaltung (3) für den ABS-Regler noch einen Überbremsungsverhinderer (4) beinhaltet. Die Realisierung dieser Funktionblöcke (3,4) kann sowohl durch Spezial-Hardware als auch durch eine softwaremäßige Implementierung erfolgen.

Um die Einbindung des Überbremsungsverhinderers (4) in eine normales Antiblockiersystem darzustellen, werden nachfolgend kurz die funktionalen Zusammenhänge der Blöcke (1,3,4) beschrieben. Die Überwachungsschaltung (3) bekommt von den induktiven Radsensoren (5,6) Impulsfolgen SO und S1, aus deren Frequenzen sie direkt die realen Umfangsgeschwindigkeiten VO und V1 der beiden Räder des Motorrads berechnet. Aus VO und V1 ermittelt die Überwachungsschaltung weitere interne Referenzsignale, wie beispielsweise die Fahrzeug-Referenzgeschwindigkeit VREF und die Fahrzeug-Referenz-Verzögerung AREF, damit sie Überbremsungszustände erkennen und sicher ausregeln kann. Im Eintrittsfall gibt die Überwachungsschaltung (3) Drucksteuersignale an den Druckmodulator (1), so daß dieser die vom Fahrer vorgegebenen Hauptbremszylinderdrücke PHBZO und PHBZ1 reduziert und als Radbremszylinderdrücke PO und P1 zu den beiden Radbremskreisen weiterleitet. Der hier zugrundegelegte Druckmodulator gibt Rückmeldesignale an die Überwachungsschaltung (3); es handelt sich dabei um Informationen über die eingestellten Bremsdrücke PO und P1, also im Falle eines Plunger-Druckmodulators (z.B. nach der DE-OS 35 30 280) um die druckbestimmenden Positionen der Tauchkolben.

Die internen Referenzsignale können vom Überbremsungsverhinderer (4) mitgenutzt werden.

Der Überbremsungsverhinderer (4) erkennt anhand dieser Signale, ob sich unter der Annahme, daß homogene Straßenverhältnisse vorliegen, ein weiterer Geschwindigkeitseinbruch am Vorderrad anbahnt und teilt dies der Überwachungsschaltung (3) in der Druckwiederbelastungsphase durch ein Signal ExFlBel mit, das den Druckmodulator veranlaßt, den Druck am Vorderrad nur noch mit einem minimalen Gradienten zu erhöhen.

Die Überwachungsschaltung (3) und der Überbremsungsverhinderer (4) arbeiten also parallel: Wenn eine Überbremsungssituation eintritt, übernimmt die Überwachungsschaltung (3) die Kontrolle und regelt die Bremsdrücke durch entsprechende Ansteuerung des Druckmodulators (1). Im Falle, daß bei hoher Fahrzeugverzögerung bald mit einem Vorderradgeschwindigkeitseinbruch zu rechnen ist, übernimmt der Überbremsungsverhinderer (4) die Kontrolle und steuert die Überwachungsschaltung für den ABS-Regler.

Gemäß der üblicherweise angewandten Regelungsstrategie führen Antiblockiersysteme eine zyklische Umschaltung zwischen drei verschiedenen Druckmodulationsphasen durch. Immer wenn das betrachtete Rad kurzzeitig überbremst wird und dann zum Blockieren neigt, was zumeist an einem steilen Einlauf der Radumfangsgeschwindigkeit in große Schlupfbereiche erkannt wird (im folgenden auch als Radgeschwindigkeitseinbruch oder Überbremsung bezeichnet), beginnt die Druckreduzierungsphase. Diese endet dann, wenn das Rad wieder beschleunigt, und es beginnt eine Druckhaltephase. Nachdem das Rad wieder in kleine (stabile) Schlupfbereiche eingelaufen ist, beginnt eine Phase des Druckaufbaus (Wiederbelastungsphase), bis ein erneuter Radgeschwindigkeitseinbruch wieder eine Druckreduzierungsphase einleitet.

Die zyklisch immer wieder angestrebte Überbremsungsprovokation soll sicherstellen, daß der eingestellte Bremsdruck nie zu weit vom maximal stabil einstellbaren Druckpunkt entfernt liegt, also keine starken Unterbremsungseffekte eintreten können. Der Nachteil dieser Einbrüche, die bei homogenen Bodenverhältnissen etwa alle 500ms auftreten, liegt in der Regelunruhe, die durch die erforderlichen großen Druckmodulationen bewirkt wird. Die Stärke der Modulationen wird um so größer, je ausgeprägter das Maximum der μ-Schlupfkurve ist.

Motorräder mit weicher Vorderradaufhängung und geringer Biegesteifigkeit der Vorderachsgabel weisen ein zusätzliches Problem auf.

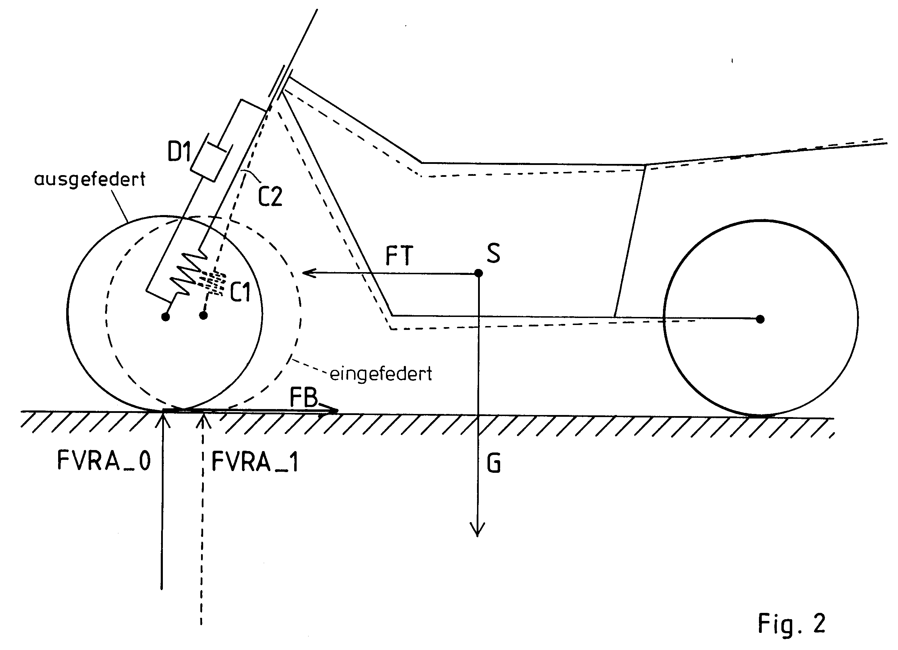

Figur 2 zeigt stark vereinfacht die Ein- und Ausfederung der Gabel. Beim Aufbau des Vorderraddrucks während einer Bremsung federt das Fahrzeug zunächst gedämpft ein (Druckfeder mit Federkonstante C1 wird komprimiert).

Gleichzeitig biegt sich die Vorderradgabel aufgrund ihrer endlichen Biegesteifigkeit C2 nach innen, da die relativ hohe Massenträgheitskraft FT des gesamten Motorrads auf die Gabel wirkt.

Je weiter sich die Gabel nach innen biegt, desto höher wird auch die Aufstandskraft (FAVR_1 > FAVR_O), da der Vorderradaufstandspunkt näher zum Schwerpunkt (S) rückt.

Aufgrund des verzögerungsbedingten Drehmoments um den Schwerpunkt verlagert sich bei starken Bremsungen nahezu das gesamte Fahrzeuggewicht auf das Vorderrad. Folglich können dann sehr hohe Bremsmomente am Vorderrad wirken, ohne daß das Rad zum Blockieren gebracht wird.

Überschreitet der Druck jedoch den Blockierpunkt, so daß das Antiblockiersystem eine Druckreduzierung einleitet, so verringert sich auch sprungartig die vom Boden her auf die Gabel wirkende Biegekraft.

Wegen ihrer geringen Masse federt die Gabel nun schnell nach vorn aus, wobei die Dämpfung D1 der Druckfeder bewirkt, daß das Vorderrad zumindest kurzzeitig mehr Aufstandskraft verliert, als aufgrund der nur relativ geringen Aufstandspunktverlagerung zu erwarten wäre. Durch den Verlust an Aufstandskraft sinkt die vom Boden antreibend wirkende Kraft FB sprungartig ab, und es entsteht aufgrund des zuvor aufgebauten hohen Radbremsmoments eine starke Radblockiertendenz, die nur durch eine starke Bremsdruckreduzierung ausgeregelt werden kann.

Dieser Effekt macht sich besonders im unteren Geschwindigkeitsbereich bemerkbar, wo aufgrund der kritischeren Schlupfkurvenverhältnisse generell schon stärkere Druckmodulationen nötig sind, um Radgeschwindigkeitseinbrüche auszuregeln.

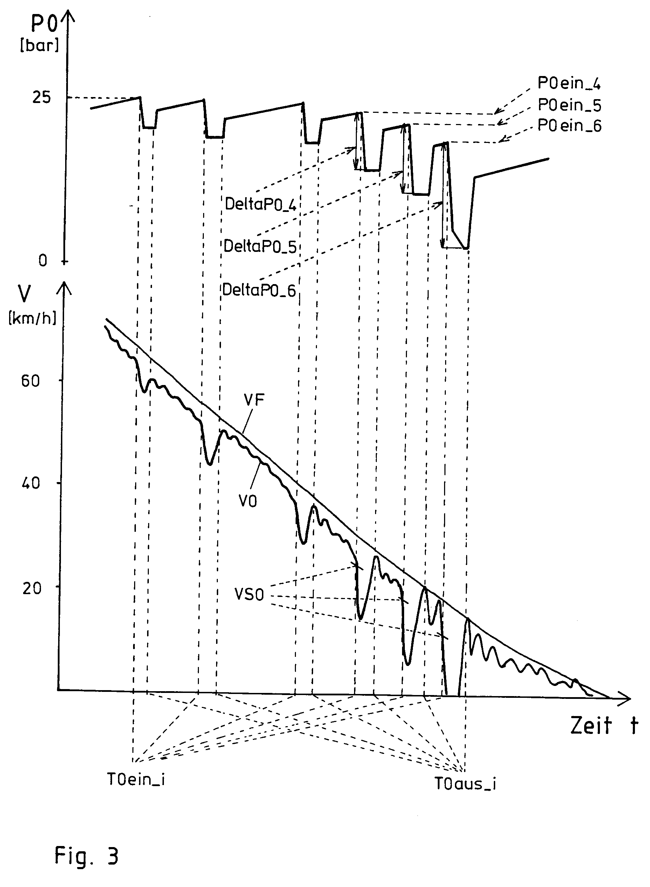

In Figur 3 ist das Zeitdiagramm einer schlechten Regelbremsung eines Motorrads mit weicher Vorderradaufhängung auf gut haftendem Boden dargestellt. Die Unruhe des Vorderrads (erkennbar an dem Jitter) steigt zum Ende der Bremsung stark an. Während bei höheren Geschwindigkeiten noch relativ kleine Druckmodulationen DeltaPO zu einer Schlupfausregelung des Rades führen, sind im unteren Geschwindigkeitsbereich Modulationen nötig, die zu starker Vorderradausfederung führen und extreme Schwingungen an der Vorderradgabel verursachen. Damit der ABS-Regler solche Schwingungen nicht als erneute Blockieranzeichen mißdeutet, muß die Erkennungsschwelle für Blockierzustände beispielsweise bei kleineren Geschwindigkeiten bzw. bei erkanntem Radjitter tiefer gesetzt werden (s. VSO in Fig. 3).

Dies hat den Nachteil, daß ein tatsächliches Radblockieren ebenfalls später erkannt wird, so daß das Rad dann bereits mit hoher Dynamik das μ-Schlupfkurvenmaximum überschritten hat und eine entsprechend schnelle und große Druckmodulation erforderlich macht:

$$DeltaPO\_6 > DeltaPO\_5 > DeltaPO\_4 \text{ etc.}$$

Die steile Druckanfahrt nach der Überbremsungsausregelung beispielsweise nach TOaus_5 ist notwendig, damit nicht zu lange mit zu kleinen Druckwerten gebremst wird. Da das Rad aber durch Schwingungen und Schwankungen in der Aufstandkraft sofort wieder zum Blockieren neigt, sinken das Bremsdruckniveau am Vorderrad und die erzielte Fahrzeugverzögerung permanent ab:

$$POein\_6 < POein\_5 < POein\_4 \text{ etc.}$$

Nach TOaus_6 ist schließlich trotz des Drucksprungs ein derartig niedriger Druckpunkt erreicht, daß kein weiteres Blockieren mehr auftritt und die Bremsung mit einem abklingend schwingenden Vorderrad terminiert.

Um diese starken Druckmodulationen, die immer komfortvermindernd und bremswegverlängernd wirken, im unteren Geschwindigkeitsbereich am Vorderrad möglichst ganz zu vermeiden, sieht die Erfindung spezielle Maßnahmen für eine schwächere Druckwiederbelastung am Vorderrad vor.

Dazu merkt der Überbremsungsverhinderer (4) sich den Vorderradbremsdruck, bei dem das Vorderrad eine Blockiertendenz zeigt.

Dies geschieht entweder durch einen Druckmeßwertgeber oder bei Verwendung eines Plunger-Druckmodulators durch Messung der Druckkolbenstellung zum Zeitpunkt der Radblockierneigung. Wenn die Wiederbelastungsrampe diesen gemerkten Punkt wieder annähernd erreicht hat und die Fahrzeugverzögerung hinreichend groß (> 0,8g) ist, so fährt die Rampe mit extrem flacher Steigung. Dies bewirkt, daß der Reifen in der letzten Phase der Bremsung mit dem Untergrund regelrecht verzahnen kann, was einerseits zu extrem hohen Verzögerungen führt und zum anderen i.a. jeden weiteren Radeinbruch in der Endphase vermeidet.

Bei dieser Maßnahme macht man sich die Tatsache zunutze, daß man im Falle einer schon sehr hohen Verzögerung nicht mehr mit einer großen Zunahme der Verzögerung rechnen kann, da 1g etwa das erreichbare Maximum ist.

Eine sinnvolle Erweiterung der Maßnahme besteht nun darin, die flache Druckanfahrt auch schon bei hohen Fahrzeuggeschwindigkeiten zu praktizieren, falls eine entsprechende Fahrzeugverzögerung erreicht wurde.

Für hohe Geschwindigkeiten muß aber eine höhere Verzögerung gefordert werden, da der Luftwiderstand besonders beim Motorrad auch noch zu einer zusätzlichen Verzögerungskraft führt.

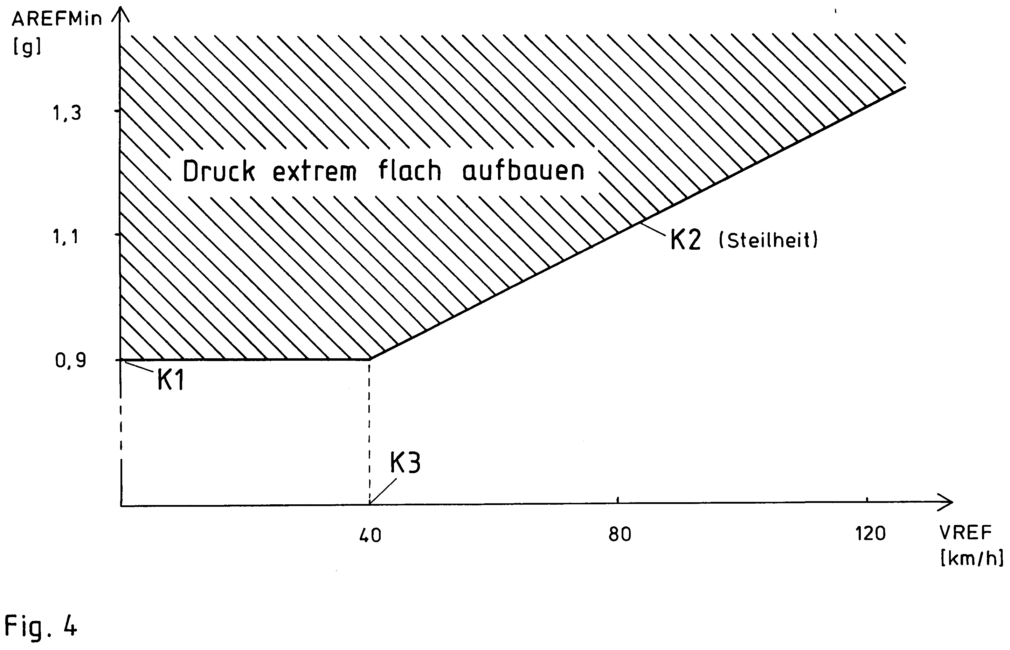

Figur 4 zeigt diese Verzögerungsschwelle AREFMin als Funktion der Fahrzeug-Referenzgeschwindlgkeit VREF:

$$AREFMin = K1 \text{ für } VREF <= K3$$

$$AREFMin = K1 + K2 * (VREF - K3) \text{ für } VREF > K3$$

mit (beispielsweie):

K1      = 0,9g,
K2      = 0,1g / 20km/h

K3 = 40km/h

Die Konstanten K1, K2 und K3 müssen dem jeweiligen Motorradtyp angepaßt werden, wobei vorwiegend die verwendeten Reifen relevant sind.

Sollten bei einer Bremsung im noch höheren Geschwindigkeitsbereich trotz der langsamen Druckanfahrt Einbrüche in der Vorderradgeschwindigkeit auftreten, so wirken sich diese nicht sehr negativ aus, der Bremsvorgang bleibt für den Fahrer trotz der Druckmodulationen recht homogen.

Wenn jedoch in diesem Bereich Einbrüche verhindert werden, können sehr große Verzögerungswerte bei völlig ruhig laufendem Motorrad erzielt werden. Eine Gefahr der Unterbremsung ist nicht gegeben, da ja sehr hohe Werte der Fahrzeug-Referenzverzögerung gefordert werden, die auch den jeweiligen Geschwindigkeitswerten angepaßt sind.

Außerdem kann man davon ausgehen, daß ein Fahrer bei diesen Verzögerungswerten ohnehin schon Schwierigkeiten haben wird, das Fahrzeug stabil in der Spur zu halten. Je nach Fahrzeugtyp stellen sich bereits Schlingereffekte oder Abhebevorgänge ein.

Aufgrund der Forderung nach einer sehr hohen Fahrzeugverzögerung wird der Mechanismus nur bei Bremsungen auf extrem griffigem Boden wirksam. Bei nasser und rutschiger Fahrbahn läuft der normale Wiederbelastungsalgorithmus ab, so daß dann natürlich auch eine zyklische Vorderradüberbremsung mit entsprechenden Geschwindigkeitseinbrüchen angestrebt wird.

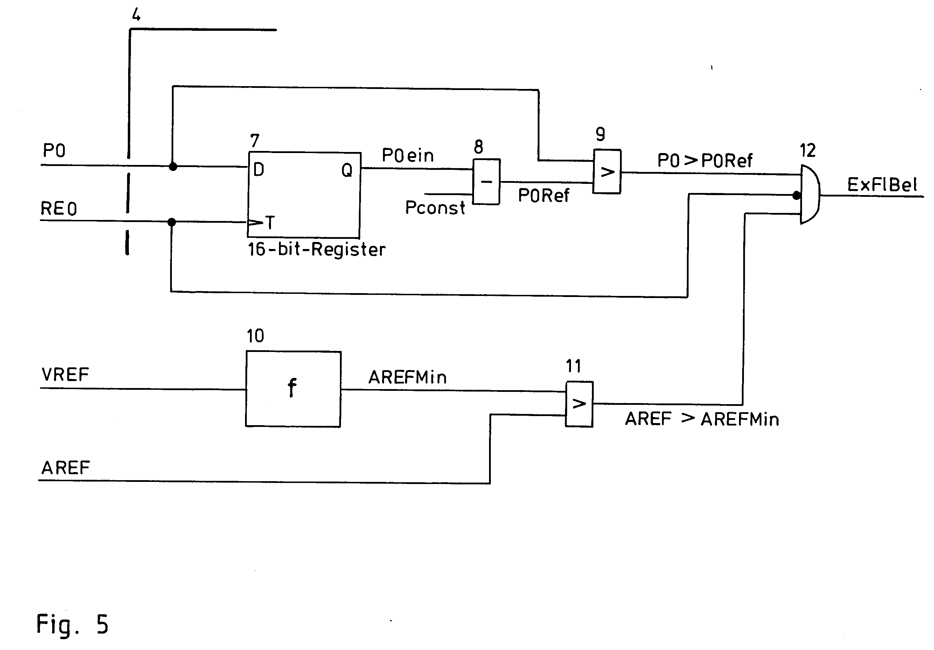

Figur 5 zeigt ein erfindungsgemäßes Realisierungsbeispiel.

Wenn sich ein Radgeschwindigkeitseinbruch anbahnt, erkennt dies die Überwachungsschaltung (3) und setzt das Signal REO von logisch '0' auf '1'. Dieses Signal veranlaßt das 16-Bit-Register (7), den aktuellen Bremsdruck am Vorderrad PO als Einbruchsbremsdruck POein abzuspeichern. Im Falle eines Plungermodulators kann anstelle von POein auch die Stellung des Vorderraddruckkolbens gemerkt werden.

Über den Subrahierer (8) wird von diesem gespeicherten Wert POein noch ein kleiner Betrag Pconst abgezogen. Die Differenz wird als Referenzsignal PORef auf einen Vergleicher (9) geführt und mit dem aktuellen Vorderradhremsdruck PO ständig verglichen. Wenn PO den Referenzwert PORef überschreitet also nahe am Einbruchsdruckpunkt, POein liegt, schaltet der Vergleicher (9) eine logische '1' auf das UND-Gatter (12).

Gleichzeitig erzeugt der Funktionsgenerator (10) gemäß Figur 4 einen Verzögerungsschwellwert AREFMin in Abhängigkeit der erreichten Fahrzeug-Referenzgeschwindigkeit VREF. Dieser wird auf den Vergleicher (11) geführt und mit der vom ABS-Regler bestimmten Fahrzeug-Referenzverzögerung AREF verglichen. Wenn AREF die Schwelle AREFMin überschreitet, schaltet der Vergleicher (11) eine logische '1' auf das UND-Gatter (12). Dieses setzt seinen Ausgang genau dann auf logisch '1', wenn PO die Schwelle PORef überschreitet, AREF die Schwelle AREFMin überschreitet und die ABS-Regelung gerade in der Wiederbelastungsphase verläuft, das Signal REO zur Anzeige eines noch bestehenden Vorderradgeschwindigkeitseinbruchs logisch 'O' ist.

Eine '1' am Ausgang des UND-Gatters (12) bedeutet, daß der Überbremsungsverhinderer (4) der Überwachungsschaltung (3) mit dem Signal ExFIBel anzeigt, daß die normale Druckanfahrt beendet ist und der Druck nun nur noch mit einer extrem flachen Rampe erhöht werden darf.

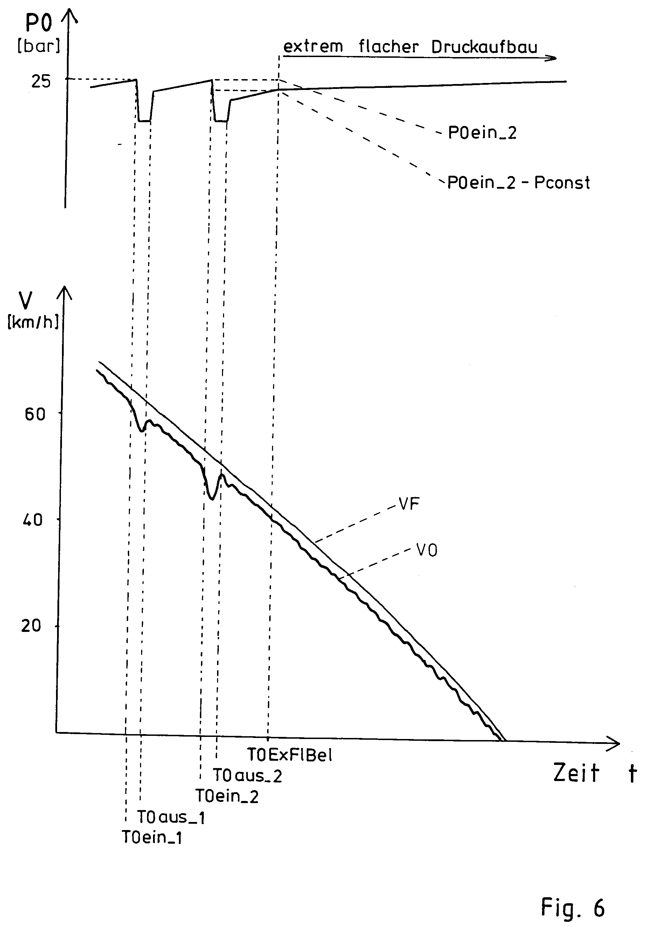

Das Zeitdiagramm in Figur 6 veranschaulicht den Effekt des beschriebenen Verfahrens. Während der Bremsdruck am Vorderrad nur noch ganz leicht ansteigt, wird die Vorderradgeschwindigkeit sehr ruhig, und es tritt keine weitere Blockierneigung auf.

Der leichte Radjitter zeigt hier an, daß sich der Schlupf in der Nähe des Optimalwertes mit dem $\mu$-Maximum befindet. Die Verzögerung nimmt zum Ende der Bremsung Spitzenwerte an, die mit einer schnellen Wiederbelastung nicht erzielbar wären.

**Patentansprüche**

1. Antiblockiersystem für Motorräder, bestehend aus induktiven Sensoren (5, 6), einer Überwachungsschaltung (3), die aus den Signalen (S0, S1) der Sensoren (5, 6) Überbremsungszustände erkennt und entsprechende Ansteuersignale erzeugt, und einem Druckmodulator (1), der die Bremsdrücke (P0, P1) an den beiden Fahrzeugrädern regelt, **dadurch gekennzeichnet, daß** die Überwachungsschaltung (3) durch einen Überbremsungsverhinderer (4) ergänzt ist, der den Vorderradbremsdruck (P0) in den Druckwiederbelastungsphasen laufend mit einer Druckreferenzschwelle (P0Ref) vergleicht und bei Überschreitung dieser Schwelle und gleichzeitiger Überschreitung einer hohen Fahrzeugverzögerungsschwelle (AREF-Min) ein Steuersignal (ExFIBel) an die Überwachungsschaltung (3) gibt, und daß bei Vorliegen des Steuersignals (ExFIBel) der Druckmodulator (1) den Vorderradbremsdruck (P0) nur noch sehr langsam erhöht.

2. Antiblockierregelsystem nach Anspruch 1, <u>dadurch gekennzeichnet</u>, daß die Druckreferenzschwelle dadurch gebildet wird, daß der Vorderradbremsdruck bei Auftreten einer ersten Blockiertendenz gespeichert und um einen konstanten Druckbetrag reduziert wird.

**3.** Antiblockierregelsystem nach Anspruch 1, <u>dadurch gekennzeichnet</u>, daß die Fahrzeug-Verzögerungsschwelle dadurch gebildet wird, daß zu einem fahrzeugspezifischen hohen Konstantwert (beispielsweise 0,9g) noch ein fahrzeuggeschwindigkeitsabhängiger Anteil addiert wird.

**4.** Antiblockierregelsystem nach den Ansprüchen 1 bis 3, <u>dadurch gekennzeichnet</u>, daß die Schaltung des Überbremsungsverhinderers (4) software-mäßig auf dem ABS-Controller implementiert ist.

**Claims**

**1.** Anti-lock braking system for motorcycles, consisting of inductive sensors (5, 6), a monitoring circuit (3), which detects overbraking by means of the signals (S0, S1) from the sensors (5, 6) and produces corresponding control signals, and a pressure modulator (1), which regulates the brake pressure (P0, P1) at each wheel of the motorcycle, <u>characterised in that</u> the monitoring circuit (3) is complemented by an overbraking preventer (4), which constantly compares the front wheel brake pressure (P0) in the pressure reload phases with a pressure reference threshold (P0Ref) and, if this threshold is exceeded and a high vehicle deceleration threshold (AREF-Min) is simultaneously exceeded, sends a control signal (ExF1Be1) to the monitoring circuit (3) and that when the control signal (ExF1Be1) is given, the pressure modulator (1) continues to increase the front wheel brake pressure (P0) only very slowly.

**2.** Anti-lock braking system according to Claim 1, <u>characterised in that</u> the pressure reference threshold is formed by the front wheel brake pressure being stored when the first locking tendency occurs and being reduced by a constant pressure volume.

**3.** Anti-lock braking system according to Claim 1, <u>characterised in that</u> the vehicle deceleration threshold is formed by a vehicle-specific high constant value (for example 0.9 g) being increased by a quota specific to the vehicle speed.

**4.** Anti-lock braking system according to Claims 1 to 3, <u>characterised in that</u> the operation of the overbraking preventer (4) is implemented in terms of software in the ABS controller.

**Revendications**

**1.** Système anti-blocage pour motocyclettes, constitué par des capteurs (5, 6) inductifs, par un circuit de surveillance (3) qui reconnaît à partir des signaux (S0, S1) des capteurs (5, 6) des états de surfreinage et qui engendre des signaux de pilotage correspondants, et par un modulateur de pression (1) qui régule les pressions de freinage (P0, P1) sur les deux roues du véhicule, caractérisé en ce que le circuit de surveillance (3) est complété par un système d'inhibition de surfreinage (4) qui compare de manière continue la pression de freinage de la roue avant (P0) dans les phases de remise en pression avec un seuil de référence de pression (P0Ref) et, en cas de dépassement de ce seuil et de dépassement simultané d'un seuil supérieur de ralentissement de véhicule (AREF-Min), fournit un signal de commande (ExFIBel) au circuit de surveillance (3) et en ce qu'en présence du signal de commande (ExFIBel), le modulateur de pression (1) n'augmente plus que très lentement la pression de freinage de la roue avant (P0).

**2.** Système anti-blocage selon la revendication 1, caractérisé en ce que le seuil de référence de pression est formé en mémorisant la pression de freinage de la roue avant dès qu'une première tendance au blocage apparaît, et en la réduisant d'un montant de pression constant.

**3.** Système anti-blocage selon la revendication 1, caractérisé en ce que le seuil de ralentissement de véhicule est formé en ajoutant à une valeur constante élevée spécifique au véhicule (par exemple 0,9 g) encore une part en fonction de la vitesse du véhicule.

**4.** Système anti-blocage selon les revendications 1 à 3, caractérisé en ce que le circuit d'inhibition de surfreinage (4) est mis en oeuvre par logiciel au niveau de l'unité de commande du système anti-blocage.

PHBZ0    PHBZ1

P0   bzw.  P0-prop.  Signal

2

4    Überbremsungsverhinderer

3    ABS - Regler

1    Elektromechanisch-
hydraulischer
Druckmodulator

VREF

AREF

RE0

ExFlBel

5
S0

6
S1

P0    P1

Ansteuersignale

Fig. 1

ausgefedert

D1

C2

C1

eingefedert

FT        S

FB

FVRA_0    FVRA_1

G

Fig. 2

Fig. 3

Fig. 4

EP 0 555 812 B1

Fig. 5

EP 0 555 812 B1

Fig. 6